# EUROPÄISCHE PATENTSCHRIFT

(11) **EP 0 982 613 B1**
(45) Veröffentlichungstag und Bekanntmachung des Hinweises auf die Patenterteilung: **28.01.2004**
(21) Anmeldenummer: 98116057.5
(22) Anmeldetag: 26.08.1998
(51) Int. Cl.: G02B 7/00

(54) **Vorrichtung zum Feststellen eines optischen Gerätes**
Fixing device for an optical apparatus
Dispositif de fixation d'un appareil optique

(43) Veröffentlichungstag der Anmeldung: 01.03.2000
(73) Patentinhaber: Vogt, Philippe, CH-8038 Zürich (CH)
(72) Erfinder: Vogt, Philippe, CH-8038 Zürich (CH)

(56) Entgegenhaltungen:
- US-A- 4 915 333
- US-A- 5 105 312
- PATENT ABSTRACTS OF JAPAN vol. 096, no. 008, 30. August 1996 & JP 08 094895 A (SONY CORP), 12. April 1996

## Beschreibung

Die Erfindung betrifft eine Vorrichtung zum Feststellen eines optischen Gerätes gemäss dem Oberbegriff des Anspruches 1.

Die bekannten Vorrichtungen dieser Art weisen ein erstes Organ und ein zweites Organ, die relativ zueinander verstellbar und mit einer Führungsschiene in und ausser Eingriff bringbar sind und eine Einrichtung zum Festlegen der Organe an der Führungsschiene auf, die einen Bolzen mit einem Gewindeabschnitt und einen Rändelknopf umfasst. Der Bolzen ist im ersten Organ befestigt und durchdringt das zweite Organ, so dass der Gewindeabschnitt ausserhalb des zweiten Organs freiliegt, um den Rändelknopf aufzuschrauben.

Eine solche Vorrichtung ist beispielsweise in JP 0809 4895 offenbart.

Die Nachteile der Vorrichtung sind im Wesentlichen darin zu sehen, dass zwecks Verschiebung des optischen Gerätes eine gewisse Sorgfalt beim Lösen der Rändelknopf erforderlich ist und dass eine Sicherung gegen unbeabsichtigtes Freigeben zum Abnehmen des optischen Gerätes nicht vorgesehen ist.

Der Erfindung liegt die Aufgabe zugrunde ein Vorrichtung zum Feststellen eines optischen Gerätes zu verbessern.

Diese Aufgabe wird erfindungsgemäss mit den Merkmalen des Anspruches 1 gelöst.

Die Vorteile der Erfindung sind im Wesentlichen in der einfachen Handhabung der Vorrichtung und in der Sicherheit vor fehlerhafter Bedienung der Vorrichtung zu sehen.

Vorteilhafte Ausführungsformen der Vorrichtung ergeben sich aus den abhängigen Ansprüchen.

Nachfolgend wird die Erfindung anhand der beiliegenden Zeichnungen erläutert.

Es zeigen:
- Fig.1: eine Seitenansicht einer Ausführung einer erfindungsgemässen Vorrichtung;
- Fig.2: einen Schnitt entlang der Linie II-II in Fig.1 im grösseren Massstab;
- Fig.3: eine Ansicht der Vorrichtung gemäss Fig.1 in Richtung des Pfeiles A, welche die Stellung des Hebels bei festgelegtem optischen Gerätes zeigt;
- Fig.4: eine Ansicht der Vorrichtung gemäss Fig.1 in Richtung des Pfeiles A, welche die Stellung des Hebels zur Verschiebung des optischen Gerätes zeigt;
- Fig.5: eine Ansicht der Vorrichtung gemäss Fig.1 in Richtung des Pfeiles A, welche die Stellung des Hebels zur Freigabe des optischen Gerätes zeigt und
- Fig.6: eine Einzelheit B in Fig.5.

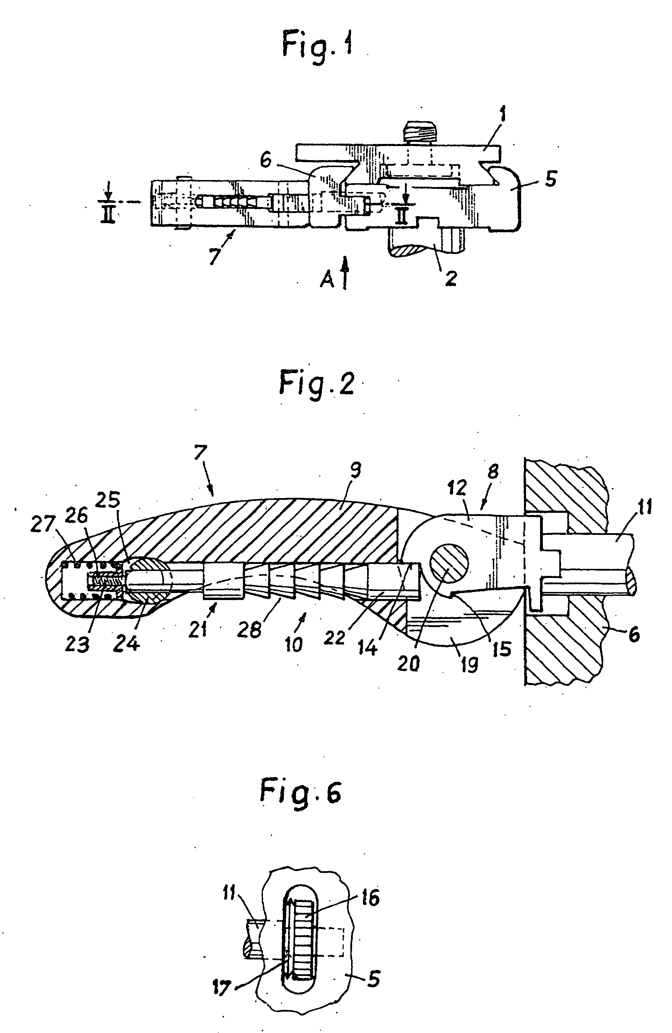

Es wird auf die Figuren 1 und 2 Bezug genommen. Mit der hier in Rede stehenden Vorrichtung wird ein optisches Gerät mit einer Führungsschiene 1 auf einem Tragteil 2 festgestellt, der auf einem Stativ oder dgl. befestigt werden kann. Wie die Figuren zeigen enthält die Vorrichtung ein erstes Organ 5, ein zweites Organ 6 und eine Einrichtung 7 mit einem Sperrglied 8, einem Hebel 9 und einer Haltevorrichtung 10. Das erste und zweite Organ 5,6 weisen Abschnitte mit Führungsflächen auf, die komplementär zu den Führungsflächen der Führungsschiene 1 sind, so dass die Führungsschiene mit dem optischen Gerät bei gegeneinander gedrückten Führungsflächen sicher gehalten wird. Das Sperrglied 8 besteht aus einem Bolzen 11, der mit dem ersten Organ 5 verbunden ist und das zweite Organ 6 durchdringt und einem Kopf 12 mit einem rechteckigen Querschnitt und einer Kontur, die eine höhere erste Schulter 14 und eine niedrigere zweite Schulter 15 aufweist. Das Sperrglied 8 ist mittels einer Rädelmutter 16 und einem Federelement 17 mit dem ersten Organ 5 verbunden (Fig.6).

Der Hebel 9 umfasst einen Körper mit einer Aussparung 19 und eine Achse 20, so dass der Hebel am Kopf 12 drehbar gelagert ist und der Hebel geschwenkt werden kann. Die Haltevorrichtung 10 enthält einen Sperrstift 21 mit einem zylindrischen Abschnitt 22 an einem Ende, der in einer Bohrung im Körper geführt ist und mit der Stirnfläche an der Kontur des Kopfes 12 anliegt und mit einem Gewindeabschnitt 23 am anderen Ende, der in eine im Körper vorgesehenen Blindbohrung ragt, ein Betätigungsorgan 24, das am Sperrstift befestigt ist und in einer im Körper ausgebildeten Aussparung 25 liegt, einen Stützteil 26, der auf dem Gewindeabschnitt 23 geschraubt ist und eine Druckfeder 27, die in der Blindbohrung angeordnet und einerseits am Grund der Blindbohrung und andererseits am Stützteil 26 abgestützt ist, um den Sperrstift 21 gegen die Kontur des Kopfes vorzuspannen. Der Sperrstift 21 ist mit einem Abschnitt 28 versehen, um den Sperrstift gegen die Druckfeder zu verschieben und den Sperrstift von der Kontur des Kopfes 12 abzuheben.

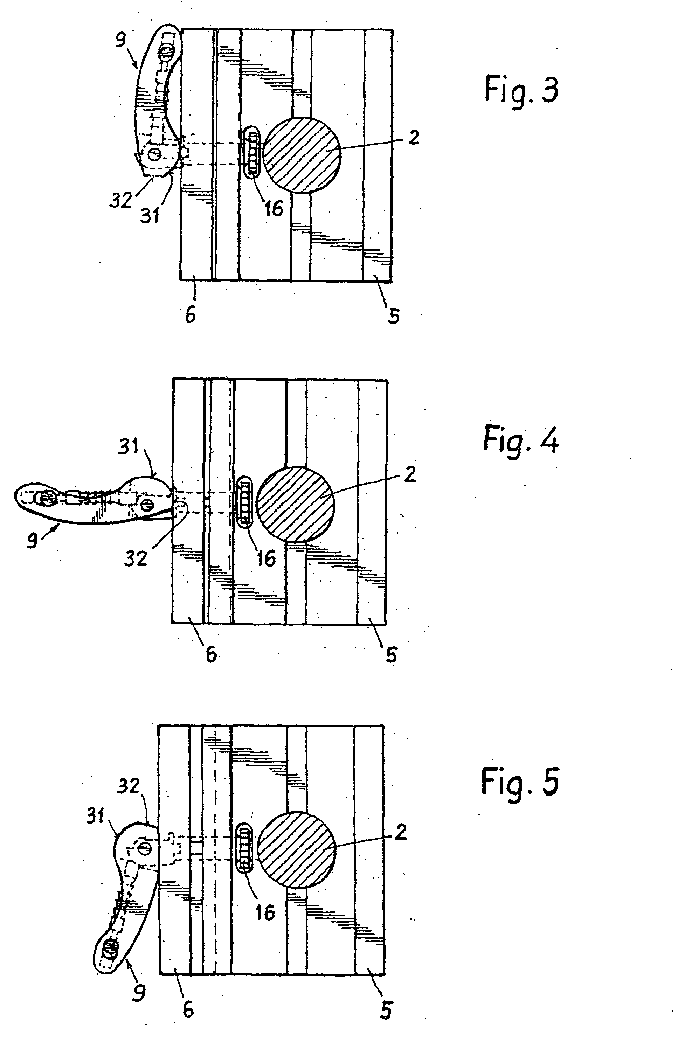

Es wird auf die Figuren 3 bis 5 Bezug genommen. Wie die Figuren 3 und 4 zeigen weist der Hebel 9 an dem am zweiten Organ 6 anliegenden Ende eine Kontur auf, die einen bogenförmigen Abschnitt 31, um das unter Federwirkung stehende zweite Organ 6 bezüglich des ersten Organs 5 vor bzw. zurück zu verschieben und einen ebenen Abschnitt 32 aufweist, um Führungsschiene 1 zur Verschiebung freizugeben. Wie Fig.5 zeigt liegt der Hebel 9 mit der Rückseite am zweiten Organ 6 an, um die Führungsschiene 1 zur Abnahme freizugeben.

Nachfolgend wird die Funktion der Vorrichtung beschrieben, wobei von der Darstellung der Fig.3 ausgegangen wird. In der Fig.3 nimmt der Hebel eine erste Stellung ein, in welcher die Führungsschiene 1 mit dem optischen Gerät festgestellt ist. In dieser Stellung hat der Hebel 9 mit dem bogenförmigen Abschnitt 31 die Organe 5,6 an die Führungsschiene 1 angedrückt und der Sperrstift 21 liegt mit dem zylindrischen Abschnitt 22 an der niedrigen Schulter 15 des Sperrgliedes 12 an. Um die Führungsschiene 1 zur Verschiebung freizugeben, wird der Hebel 9 im Gegenuhrzeigersinn in eine zweite Stellung geschwenkt. Durch diese Schwenkbewegung wird der Sperrstift 21 von der niedrigen Schulter 15 abgehoben, wobei das unter Federwirkung stehende zweite Organ 6 der Kontur des bogenförmigen Abschnittes folgt. Um das optische Gerät 1 zur Abnahme freizugeben, wird der Hebel 9 im Gegenuhrzeigersinn in eine dritte Stellung geschwenkt. Diese Schwenkbewegung kann nur ausgeführt werden, wenn der zylindrische Abschnitt 22 vorher durch manuelles Zurückziehen des Sperrstift 21 von der höheren Schulter 14 gelöst wird. Aus der vorstehenden Beschreibung wird der Vorteil der Vorrichtung eine unbeabsichtigte Freigabe zum Abnehmen des optischen Gerätes zu verhindern besonders deutlich.

## Patentansprüche

1. Vorrichtung zum Feststellen eines optischen Gerätes mit einer Führungsschiene (1) an einem Tragteil (2), mit einem ersten Organ (5), welches mit dem Tragteil (2) verbunden ist und einem zweiten Organ (6), das relativ zum ersten Organ verstellbar ist, wobei das erste und zweite Organ Führungsflächen aufweisen, die komplementär zu den Führungsflächen der Führungsschiene (1) sind, und mit einer Einrichtung (7) zum Feststellen der Führungsschiene (1) durch Gegeneinanderdrücken der Führungsflächen, die mit dem ersten Organ verbunden ist und das zweite Organ durchdringt, **dadurch gekennzeichnet, dass** die Einrichtung (7) ein Sperrglied (8) und einen Hebel (9) mit einer unter Federwirkung stehenden Haltevorrichtung (10) aufweist, der am Sperrglied schwenkbar gelagert ist und am zweiten organ (6) anliegt, derart, dass der Hebel in einer ersten Stellung das optische Gerät festlegt, in einer zweiten Stellung das optische Gerät zum Verschieben freigibt und in einer dritten Stellung das optische Gerät zur Abnahme freigibt.

2. Vorrichtung nach Anspruch 1, **dadurch gekennzeichnet, dass** die Haltevorrichtung (10) einen unter Federwirkung stehenden Sperrstift (21), der mit dem Sperrglied (8) in und ausser Eingriff bringbar ist und ein Betätigungsorgan (24) enthält, das mit dem Sperrstift verbunden ist, um den Sperrstift vom Sperrglied zu lösen.

3. Vorrichtung nach Anspruch 1, **dadurch gekennzeichnet, dass** das Sperrglied (8) eine erste Schulter (14) und eine zweite Schulter (15) aufweist und dass der Sperrstift (21) im Hebel (9) beweglich angeordnet ist.

4. Vorrichtung nach Anspruch 1 oder 2, **dadurch gekennzeichnet, dass** der Sperrstift (21) einen Abschnitt (28) zum Betätigen des Sperrstiftes aufweist, der teilweise frei zugänglich ist.

## Claims

1. Apparatus for the fixing of an optical apparatus having a guide rail (1) to a carrier part (2) comprising a first member (5) which is connected to the carrier part (2) and a second member (6) which is adjustable relative to the first member, wherein the first member (5) and second member (6) including guide surfaces which are complementary to the guide surfaces of the guide rail (1), and with a device (7) for the fixing of the guide rail (1) by means of pressing the guide surfaces together which is connected to the first member and passes through the second member, **characterised in that** the device (7) has a blocking member (8) and a lever (9) with a holding device (10) standing under spring action, the lever being pivotally mounted on the blocking member and contacting the second member (6) in such a way that the lever fixes the optical apparatus in a first position, frees the optical apparatus for displacement in a second position and frees the optical apparatus for removal in a third position.

2. Apparatus in accordance with claim 1, **characterised in that** the holding device (10) contains a blocking pin (21) standing under spring action which can be brought into and out of engagement with the blocking member (8) and an actuating member (24) which is connected to the blocking pin in order to release the blocking pin from the blocking member.

3. Apparatus in accordance with claim 1, **characterised in that** the blocking member (8) has a first shoulder (14) and a second shoulder (15) and **in that** the blocking pin (21) is movably arranged in the lever (9).

4. Apparatus in accordance with claim 1 or claim 2, **characterised in that** the blocking pin (21) has a section (28) for the actuation of the blocking pin which is partly freely accessible.

## Revendications

1. Dispositif pour immobiliser un appareil optique, avec un rail de guidage (1) sur une partie porteuse (2), avec un premier organe (5) qui est assemblé à la partie porteuse (2) et un deuxième organe (6) qui peut être déplacé par rapport au premier organe, le premier et le deuxième organes présentant des faces de guidage qui sont complémentaires des faces de guidage du rail de guidage (1), et avec un équipement (7) pour immobiliser le rail de guidage (1) par pression mutuelle des faces de guidage, équipement qui est assemblé au premier organe et traverse le deuxième organe, **caractérisé en ce que** l'équipement (7) présente un élément de blocage (8) et un levier (9) avec un dispositif de maintien (10) se trouvant sous effet de ressort, le levier étant monté à pivotement sur l'élément de blocage et s'appliquant contre le deuxième organe (6), de telle sorte que le levier, dans une première position, immobilise l'appareil optique, dans une deuxième position, libère l'appareil optique pour qu'il puisse être déplacé en translation, et, dans une troisième position, libère l'appareil optique pour qu'il puisse être enlevé.

2. Dispositif selon la revendication 1, **caractérisé en ce que** le dispositif de maintien (10) contient un doigt de blocage (21) se trouvant sous effet de ressort, qui peut être amené en engagement avec l'élément de blocage (8) et en être désengagé, et un organe d'actionnement (24) qui est relié au doigt de blocage afin de dégager le doigt de blocage de l'élément de blocage.

3. Dispositif selon la revendication 1, **caractérisé en ce que** l'élément de blocage (8) présente un premier épaulement (14) et un deuxième épaulement (15), et **en ce que** le doigt de blocage (21) est disposé de manière mobile dans le levier (9).

4. Dispositif selon la revendication 1 ou 2, **caractérisé en ce que** le doigt de blocage (21) présente un tronçon (28) pour l'actionnement du doigt de blocage qui est partiellement librement accessible.
